# EUROPEAN PATENT APPLICATION

(11) **EP 4 310 657 A1**
(43) Date of publication of application: **24.01.2024**
(21) Application number: 22778401.4
(22) Date of filing: 22.02.2022
(51) Int. Cl.: G06F 3/06

(54) **MANAGEMENT METHOD AND APPARATUS FOR ACTIVE-ACTIVE STORAGE SYSTEM**

(30) Priority: 29.03.2021 CN 202110336901
(71) Applicant: Huawei Technologies Co., Ltd., Shenzhen, Guangdong 518129 (CN)
(72) Inventor: CHEN, Jing, Shenzhen, Guangdong 518129 (CN)
(74) Representative: Huawei European IPR
(86) International application number: PCT/CN2022/077254
(87) International publication number: WO 2022/206216

(57) **Abstract**

Embodiments of this application relate to the field of information technologies, and provide an active-active storage system management method and apparatus, to improve accuracy of determining a sub-healthy object. The method includes: obtaining first detection report information of a first storage system and second detection report information of a second storage system, and determining a sub-healthy object in an active-active storage system based on the first detection report information and the second detection report information. The first detection report information is generated by the first storage system, and the second detection report information is generated by the second storage system.

## Description

This application claims priority to Chinese Patent Application No. 202110336901.8, filed with the China National Intellectual Property Administration on March 29, 2021 and entitled "ACTIVE-ACTIVE STORAGE SYSTEM MANAGEMENT METHOD AND APPARATUS", which is incorporated herein by reference in its entirety.

### TECHNICAL FIELD

Embodiments of this application relate to the field of information technologies, and in particular, to an active-active storage system management method and apparatus.

### BACKGROUND

An active-active storage system includes a first storage system and a second storage system. The first storage system and the second storage system each may process a service request (for example, a data write request) from another device. In addition, data synchronization may be performed between the first storage system and the second storage system, so that data of the first storage system is consistent with that of the second storage system.

Currently, if a first storage system in an active-active storage system receives a service request, the first storage system processes the service request. Specifically, it is assumed that the service request is a data write request. The first storage system writes data into the first storage system based on the data write request, and the first storage system sends a synchronization message to a second storage system, so that the second storage system writes the data in the data write request into the second storage system. Therefore, data synchronization between the first storage system and the second storage system is implemented. When an average delay of response information of the synchronization message sent by the first storage system to the second storage system is greater than a preset delay, the first storage system determines that the second storage system is a sub-healthy object in the active-active storage system. Subsequently, the first storage system no longer synchronizes the data to the second storage system, and the second storage system no longer receives the service request.

However, in a process in which the first storage system determines the sub-healthy object in the active-active storage system based on the average delay of the response information of the synchronization message sent by the first storage system to the second storage system, a state of the first storage system and a state of a link between the first storage system and the second storage system are ignored. Consequently, the determined sub-healthy object in the active-active storage system may be inaccurate.

### SUMMARY

Embodiments of this application provide an active-active storage system management method and apparatus, to improve accuracy of determining a sub-healthy object in an active-active storage system.

To achieve the foregoing objective, the following technical solutions are used in embodiments of this application.

According to a first aspect, an embodiment of this application provides an active-active storage system management method. An active-active storage system includes a first storage system and a second storage system. The active-active storage system management method includes: obtaining first detection report information of the first storage system and second detection report information of the second storage system; and determining a sub-healthy object in the active-active storage system based on the first detection report information and the second detection report information. The first detection report information is generated by the first storage system, and the second detection report information is generated by the second storage system.

According to the active-active storage system management method provided in this embodiment of this application, each storage system in the active-active storage system generates detection report information of each storage system, and then the detection report information of each storage system is comprehensively evaluated, to determine the sub-healthy object in the active-active storage system. Compared with a conventional technology, the method comprehensively analyzes a state of the active-active storage system. This can improve accuracy of determining the sub-healthy object in the active-active storage system.

In a possible implementation, before the obtaining first detection report information of the first storage system and second detection report information of the second storage system, the active-active storage system management method provided in this embodiment of this application further includes: determining that quality of service of the active-active storage system does not meet a preset condition.

In a possible implementation, the preset condition includes at least one of the following: A proportion of a quantity of times of not returning response information received by a storage system is less than a preset proportion of the quantity of times of not returning the response information; an average delay of the response information is less than a preset delay of the response information; and a failure rate of returning the response information is less than a preset failure rate of the response information.

In a possible implementation, the first detection report information includes state information of the first storage system.

When response information of a first message does not meet the preset condition, a state of the first storage system is recorded as a sub-healthy state in the first detection report information. The first message is a message sent by a logical unit number/file system service layer of the first storage system to a cache layer of the first storage system in a process in which the first storage system processes a first service request.

In a possible implementation, the first detection report information includes the state of the first storage system and a state of the second storage system. When the response information of the first message meets the preset condition, and response information of a second message does not meet the preset condition, the state of the first storage system is recorded as a healthy state and the state of the second storage system is recorded as a sub-healthy state in the first detection report information. The second message is a message sent by the logical unit number/file system service layer of the first storage system to a logical unit number/file system service layer of the second storage system in the process in which the first storage system processes the first service request.

In a possible implementation, when the response information of the first message meets the preset condition, the response information of the second message meets the preset condition, and response information of the first service request does not meet the preset condition, the state of the first storage system is recorded as a sub-healthy state and the state of the second storage system is recorded as a healthy state in the first detection report information.

In a possible implementation, when the response information of the first message meets the preset condition, the response information of the second message meets the preset condition, and response information of the first service request meets the preset condition, the state of the first storage system is recorded as a healthy state and the state of the second storage system is recorded as a healthy state in the first detection report information.

In a possible implementation, the first detection report information includes state information of the first storage system. When at least one of response information of a third message, response information of a fourth message, or response information of a fifth message does not meet the preset condition, a state of the first storage system is recorded as a sub-healthy state in the first detection report information.

The third message is a message sent by a logical unit number/file system service layer of the first storage system to a cache layer of the first storage system in a process in which the first storage system processes a second service request. The fourth message is a message sent by the cache layer of the first storage system to a volume service layer of the storage system in the process in which the first storage system processes the second service request. The fifth message is a message sent by the volume service layer of the first storage system to a storage pool layer of the storage system in the process in which the first storage system processes the second service request.

In a possible implementation, the first detection report information includes the state information of the first storage system and state information of the second storage system. When the response information of the third message, the response information of the fourth message, and the response information of the fifth message meet the preset condition, and at least one of response information of a sixth message and response information of a seventh message does not meet the preset condition, the state of the first storage system is recorded as a healthy state and a state of the second storage system is recorded as a sub-healthy state in the first detection report information.

The sixth message is a message sent by the cache layer of the first storage system to a cache layer of the second storage system in the process in which the first storage system processes the second service request. The seventh message is a message sent by the volume service layer of the first storage system to a volume service layer of the second storage system in the process in which the first storage system processes the second service request.

In a possible implementation, when the response information of the third message, the response information of the fourth message, and the response information of the fifth message meet the preset condition, the response information of the sixth message and the response information of the seventh message both meet the preset condition, and response information of the second service request does not meet the preset condition, the state of the first storage system is recorded as a sub-healthy state and the state of the second storage system is recorded as a healthy state in the first detection report information.

In a possible implementation, when the response information of the third message, the response information of the fourth message, and the response information of the fifth message meet the preset condition, the response information of the sixth message and the response information of the seventh message both meet the preset condition, and the response information of the second service request meets the preset condition, the state of the first storage system is recorded as a healthy state and the state of the second storage system is recorded as a healthy state in the first detection report information.

In a possible implementation, when the state of the first storage system in the first detection report information is a sub-healthy state, and a state of the second storage system in the second detection report information is a healthy state, the sub-healthy object in the active-active storage system is the first storage system.

In a possible implementation, when a state of the second storage system in the second detection report information is a sub-healthy state, and the state of the first storage system in the first detection report information is a healthy state, the sub-healthy object in the active-active storage system is the second storage system.

In a possible implementation, when the state of the first storage system in the first detection report information is a healthy state, and a state of the first storage system in the second detection report information is a sub-healthy state; or when a state of the second storage system in the second detection report information is a healthy state, and the state of the second storage system in the first detection report information is a sub-healthy state, the sub-healthy object in the active-active storage system is a link between the first storage system and the second storage system.

In a possible implementation, when the state of the first storage system in the first detection report information is a sub-healthy state, and a state of the second storage system in the second detection report information is a sub-healthy state, the sub-healthy object in the active-active storage system is the first storage system and the second storage system.

In a possible implementation, when the sub-healthy object in the active-active storage system is the first storage system, the first storage system stops receiving a service request, and the first storage system disconnects the link between the first storage system and the second storage system.

In a possible implementation, when the sub-healthy object in the active-active storage system is the second storage system, the first storage system stops sending the second message to the second storage system, or stops sending the sixth message and the seventh message to the second storage system, and the first storage system sends indication information to the second storage system. The indication information indicates the second storage system to stop receiving a service request.

In a possible implementation, when the sub-healthy object in the active-active storage system is the link between the first storage system and the second storage system, the first storage system stops receiving a service request, and the first storage system disconnects the link between the first storage system and the second storage system; or the first storage system stops sending the second message to the second storage system, or stops sending the sixth message and the seventh message to the second storage system, and the first storage system sends indication information to the second storage system. The indication information indicates the second storage system to stop receiving a service request.

In a possible implementation, when the sub-healthy object in the active-active storage system is the first storage system and the second storage system, the first storage system reports alarm information.

According to a second aspect, an embodiment of this application provides an active-active storage system management apparatus, including an obtaining module and a determining module. The obtaining module is configured to obtain first detection report information of a first storage system and second detection report information of a second storage system. The first detection report information is generated by the first storage system, and the second detection report information is generated by the second storage system. The determining module is configured to determine a sub-healthy object in the active-active storage system based on the first detection report information and the second detection report information.

In a possible implementation, the determining module is further configured to determine that quality of service of the active-active storage system does not meet a preset condition.

In a possible implementation, the preset condition includes at least one of the following: A proportion of a quantity of times of not returning response information received by a storage system is less than a preset proportion of the quantity of times of not returning the response information; an average delay of the response information is less than a preset delay of the response information; and a failure rate of returning the response information is less than a preset failure rate of the response information.

In a possible implementation, the first detection report information includes state information of the first storage system. When response information of a first message does not meet the preset condition, a state of the first storage system is recorded as a sub-healthy state in the first detection report information. The first message is a message sent by a logical unit number/file system service layer of the first storage system to a cache layer of the first storage system in a process in which the first storage system processes a first service request.

In a possible implementation, the first detection report information includes the state of the first storage system and a state of the second storage system. When the response information of the first message meets the preset condition, and response information of a second message does not meet the preset condition, the state of the first storage system is recorded as a healthy state and the state of the second storage system is recorded as a sub-healthy state in the first detection report information.

The second message is a message sent by the logical unit/file system service layer of the first storage system to a logical unit number/file system service layer of the second storage system in the process in which the first storage system processes the first service request.

In a possible implementation, when the response information of the first message meets the preset condition, the response information of the second message meets the preset condition, and response information of the first service request does not meet the preset condition, the state of the first storage system is recorded as a sub-healthy state and the state of the second storage system is recorded as a healthy state in the first detection report information.

In a possible implementation, when the response information of the first message meets the preset condition, the response information of the second message meets the preset condition, and response information of the first service request meets the preset condition, the state of the first storage system is recorded as a healthy state and the state of the second storage system is recorded as a healthy state in the first detection report information.

In a possible implementation, the first detection report information includes state information of the first storage system. When at least one of response information of a third message, response information of a fourth message, or response information of a fifth message does not meet the preset condition, a state of the first storage system is recorded as a sub-healthy state in the first detection report information. The third message is a message sent by a logical unit number/file system service layer of the first storage system to a cache layer of the first storage system in a process in which the first storage system processes a second service request. The fourth message is a message sent by the cache layer of the first storage system to a volume service layer of the first storage system in the process in which the first storage system processes the second service request. The fifth message is a message sent by the volume service layer of the first storage system to a storage pool layer of the first storage system in the process in which the first storage system processes the second service request.

In a possible implementation, the first detection report information includes the state information of the first storage system and state information of the second storage system. When the response information of the third message, the response information of the fourth message, and the response information of the fifth message meet the preset condition, and at least one of response information of a sixth message and response information of a seventh message does not meet the preset condition, the state of the first storage system is recorded as a healthy state and a state of the second storage system is recorded as a sub-healthy state in the first detection report information. The sixth message is a message sent by the cache layer of the first storage system to a cache layer of the second storage system in the process in which the first storage system processes the second service request. The seventh message is a message sent by the volume service layer of the first storage system to a volume service layer of the second storage system in the process in which the first storage system processes the second service request.

In a possible implementation, when the response information of the third message, the response information of the fourth message, and the response information of the fifth message meet the preset condition, the response information of the sixth message and the response information of the seventh message both meet the preset condition, and response information of the second service request does not meet the preset condition, the state of the first storage system is recorded as a sub-healthy state and the state of the second storage system is recorded as a healthy state in the first detection report information.

In a possible implementation, when the response information of the third message, the response information of the fourth message, and the response information of the fifth message meet the preset condition, the response information of the sixth message and the response information of the seventh message both meet the preset condition, and the response information of the second service request meets the preset condition, the state of the first storage system is recorded as a healthy state, and the state of the second storage system is recorded as a healthy state in the first detection report information.

In a possible implementation, when the state of the first storage system in the first detection report information is a sub-healthy state, and a state of the second storage system in the second detection report information is a healthy state, the sub-healthy object in the active-active storage system is the first storage system.

In a possible implementation, when a state of the second storage system in the second detection report information is a sub-healthy state, and the state of the first storage system in the first detection report information is a healthy state, the sub-healthy object in the active-active storage system is the second storage system.

In a possible implementation, when the state of the first storage system in the first detection report information is a healthy state, and a state of the first storage system in the second detection report information is a sub-healthy state; or when a state of the second storage system in the second detection report information is a healthy state, and the state of the second storage system in the first detection report information is a sub-healthy state, the sub-healthy object in the active-active storage system is a link between the first storage system and the second storage system.

In a possible implementation, when the state of the first storage system in the first detection report information is a sub-healthy state, and a state of the second storage system in the second detection report information is a sub-healthy state, the sub-healthy object in the active-active storage system is the first storage system and the second storage system.

In a possible implementation, when the sub-healthy object in the active-active storage system is the first storage system, the first storage system stops receiving a service request, and the first storage system disconnects the link between the first storage system and the second storage system.

In a possible implementation, when the sub-healthy object in the active-active storage system is the second storage system, the first storage system stops sending the second message to the second storage system, or stops sending the sixth message and the seventh message to the second storage system, and the first storage system sends indication information to the second storage system. The indication information indicates the second storage system to stop receiving a service request.

In a possible implementation, when the sub-healthy object in the active-active storage system is the link between the first storage system and the second storage system, the first storage system, stops receiving a service request, and the first storage system disconnects the link between the first storage system and the second storage system; or the first storage system stops sending the second message to the second storage system, or stops sending the sixth message and the seventh message to the second storage system, and the first storage system sends indication information to the second storage system. The indication information indicates the second storage system to stop receiving a service request.

In a possible implementation, when the sub-healthy object in the active-active storage system is the first storage system and the second storage system, the first storage system reports alarm information.

According to a third aspect, an embodiment of this application provides an active-active storage system management apparatus, including a memory and a processor. The memory is coupled to the processor. The memory is configured to store computer program code, and the computer program code includes computer instructions. When the computer instructions are executed by the processor, the active-active storage system management apparatus is enabled to perform the method according to any one of the first aspect and the possible implementations of the first aspect.

According to a fourth aspect, an embodiment of this application provides a computer storage medium, configured to store computer software instructions used by the foregoing active-active storage system management apparatus, for example, perform the method according to any one of the first aspect and the possible implementations of the first aspect.

According to a fifth aspect, an embodiment of this application provides a computer program product. When the computer program product runs on a computer, the computer is enabled to perform the method according to any one of the first aspect and the possible implementations of the first aspect.

It should be understood that, for advantageous effects achieved by the technical solutions in the second aspect to the fifth aspect and the corresponding impossible implementations in embodiments of this application, refer to the foregoing technical effects in the first aspect and the corresponding possible implementations of the first aspect. Details are not described herein again.

### BRIEF DESCRIPTION OF DRAWINGS

FIG. 1 is a schematic diagram 1 of a cross-storage system active-active storage architecture according to an embodiment of this application;
FIG. 2 is a schematic diagram 1 of a cross-storage system cluster active-active storage architecture according to an embodiment of this application;
FIG. 3 is a schematic structural diagram 1 of an active-active storage system management method according to an embodiment of this application;
FIG. 4 is a schematic structural diagram 2 of an active-active storage system management method according to an embodiment of this application;
FIG. 5 shows an active-active storage system management method 1 according to an embodiment of this application;
FIG. 6 shows an active-active storage system management method 2 according to an embodiment of this application;
FIG. 7 shows an active-active storage system management method 3 according to an embodiment of this application;
FIG. 8 shows a method 1 for generating first detection report information according to an embodiment of this application;
FIG. 9 shows a method 2 for generating first detection report information according to an embodiment of this application;
FIG. 10 shows a method 3 for generating first detection report information according to an embodiment of this application;
FIG. 11 is a schematic structural diagram 1 of an active-active storage system management apparatus according to an embodiment of this application; and
FIG. 12 is a schematic diagram 2 of an active-active storage system management apparatus according to an embodiment of this application.

### DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first storage system, a second storage system, and the like are used to distinguish between different storage systems, but do not indicate a particular order of the storage systems.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a relative concept in a specific manner.

In the descriptions of embodiments of this application, unless otherwise stated, "a plurality of" means two or more than two. For example, a plurality of processing units are two or more processing units, and a plurality of systems are two or more systems.

First, some concepts in an active-active storage system management method and apparatus provided in embodiments of this application are described.

An active-active storage system includes a first storage system and a second storage system. The first storage system and the second storage system each may process a service request. In addition, data synchronization may be performed between the first storage system and the second storage system, so that data of the first storage system is consistent with that of the second storage system.

Currently, an active-active storage system may include a cross-site mirrored active-active storage system and a cross-site cluster active-active storage system.

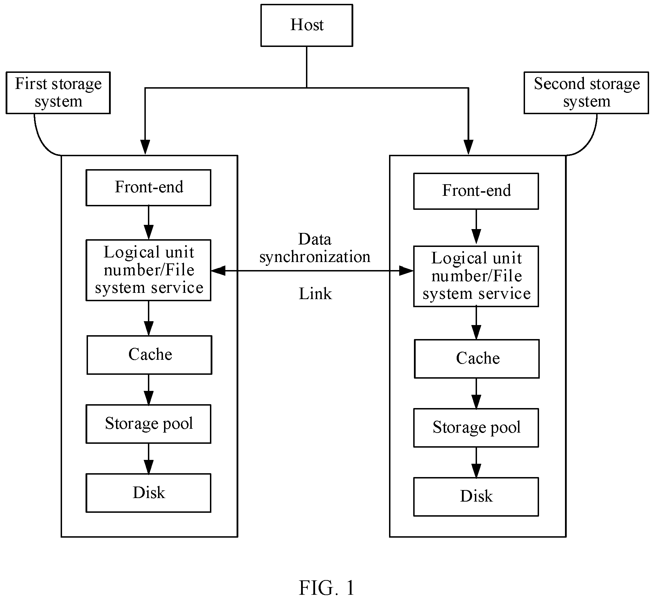

For example, FIG. 1 is a schematic architectural diagram of a cross-site mirrored active-active storage system. As shown in FIG. 1, structures of two storage systems in the cross-site mirrored active-active storage system are similar. Each storage system includes a front-end layer, a logical unit number (LUN)/file system service (FS) layer, a cache (cache) layer, a storage pool (storage pool) layer, and a disk layer. The storage system may be a storage array, a distributed storage system, or the like. This is not limited in embodiments of this application.

The following uses an example in which a service request is a data write request to briefly describe a process in which the cross-site mirrored active-active storage system processes the service request. If a first storage system receives a data write request sent by a host, the first storage system encapsulates the received data write request (for example, performs operations such as splitting, combination, and conversion on the data write request) via a front-end (Front-End) layer of the first storage system, and delivers encapsulated data write request to a logical unit number/file system service layer of the first storage system. In an aspect, the logical unit number/file system service layer writes data in the data write request into a disk layer via a cache layer and a storage pool layer, to complete local writing of the data. In another aspect, the logical unit number/file system service layer of the first storage system sends a synchronization message of the data write request to a logical unit number/file system service layer of the second storage system. Further, the logical unit number/file system service layer of the second storage system writes the data into a disk layer of the second storage system via a cache layer and a storage pool layer of the second storage system, to complete data synchronization.

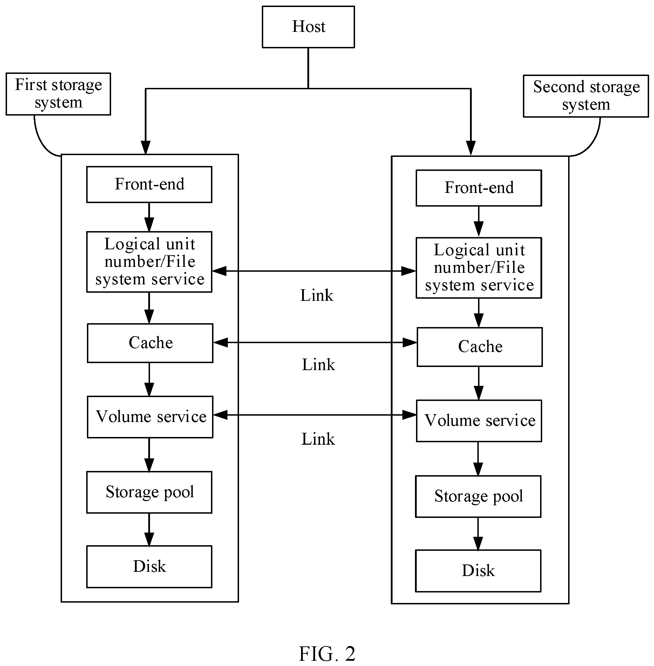

For example, FIG. 2 is a schematic architectural diagram of a cross-site cluster active-active storage system. As shown in FIG. 2, structures of two storage systems in the cross-site cluster active-active storage system are similar. Each storage system includes a front-end (Front-End) layer, a logical unit number (LUN)/file system service (FS) layer, a cache layer, a volume service layer, a storage pool (storage pool) layer, and a disk layer.

The following uses an example in which a service request is a data write request to briefly describe a process in which the cross-site cluster active-active storage system processes the service request. If a first storage system receives a data write request from a host, the first storage system delivers the data write request to a logical unit number/file system service layer of the first storage system by encapsulating the data write request via a front-end layer of the first storage system. The logical unit number/file system service layer of the first storage system performs load balancing on the data write request, to determine whether the first storage system processes the data write request or a second storage system processes the data write request.

In one case, when it is determined that the first storage system processes the data write request, in an aspect, the logical unit number/file system service layer of the first storage system writes the data request to a cache layer, and the cache layer of the first storage system sends a synchronization message of the data write request to a cache layer of the second storage system. After data in the data write request is successfully written into the cache layer of the first storage system, the cache layer of the first storage system writes the data into a volume service layer of the first storage system, and the volume service layer of the first storage system sends the synchronization message of the data write request to a volume service layer of the second storage system. After the data in the data write request is successfully written into the volume service layer of the first storage system, the data is further written into a disk layer of the first storage system via a storage pool layer of the first storage system, to complete local writing of the data. In another aspect, after receiving the synchronization message of the data write request, the cache layer of the second storage system writes the data into the cache layer of the second storage system. After receiving the synchronization message of the data write request, the volume service layer of the second storage system writes the data into a disk layer of the second storage system via a storage pool layer of the second storage system, to complete data synchronization.

In another case, when it is determined, through load balancing, that the second storage system processes the data write request, the logical unit number/file system service layer of the first storage system sends the data write request to a logical unit number/file system service layer of the second storage system. After receiving the data write request, the logical unit number/file system service layer of the second storage system writes data in the data request into a cache layer of the second storage system, and the cache layer of the second storage system sends a synchronization message of the data write request to a cache layer of the first storage system. After the data in the data write request is successfully written into the cache layer of the second storage system, the cache layer of the second storage system writes the data into a volume service layer of the second storage system, and the volume service layer of the second storage system sends the synchronization message of the data write request to a volume service layer of the first storage system. After the data in the data write request is successfully written into the volume service layer of the second storage system, the data is further written into a disk layer of the second storage system via a storage pool layer of the second storage system, to complete local writing of the data. In another aspect, after receiving the synchronization message of the data write request, the cache layer of the first storage system writes the data into the cache layer of the first storage system. After receiving the synchronization message of the data write request, the volume service layer of the first storage system writes the data into a disk layer of the first storage system via a storage pool layer of the first storage system, to complete data synchronization.

As people pay more attention to quality of service of data, more enterprises use an active-active storage system as an optimal solution to ensure high quality of service of data. For the active-active storage system shown in FIG. 1, when an average delay of response information of a data synchronization message sent by the first storage system to the second storage system is greater than a preset delay, the first storage system determines that the second storage system is a sub-healthy object in the active-active storage system. Alternatively, when an absolute value of a difference between an average delay of response information of a data synchronization message sent by the first storage system to the second storage system and an average delay of response information of a data synchronization message sent by the second storage system to the first storage system is greater than a preset threshold, the first storage system determines that the second storage system is a sub-healthy object in the active-active storage system. If the second storage system is the sub-healthy object, the first storage system no longer sends the data synchronization message to the second storage system, and subsequently, the host no longer sends the service request to the second storage system, in other words, the second storage system no longer processes the service request.

In the foregoing method for determining a sub-healthy object in the active-active storage system, the second storage system is directly determined as the sub-healthy object, and a state of a link between the first storage system and the second storage system is ignored when the first storage system synchronizes data to the second storage system. Consequently, the determined sub-healthy object is inaccurate. In addition, in the foregoing method for determining the sub-healthy object in the active-active storage system, the second storage system is directly determined as the sub-healthy object, and a state of the first storage system is ignored. Consequently, the determined sub-healthy object is inaccurate.

Based on a problem that the determined sub-healthy object in the active-active storage system is inaccurate in a conventional technology, embodiments of this application provide an active-active storage system management method and apparatus. A primary storage system (which is referred to as a first storage system) in an active-active storage system obtains first detection report information of the first storage system and second detection report information of a second storage system, and determines a sub-healthy object in the active-active storage system based on the first detection report information and the second detection report information. The first detection report information is generated by the first storage system, and the first detection report information includes a state of the first storage system. The second detection report information is generated by the second storage system, and the second detection report information includes a state of the second storage system. According to the technical solutions provided in embodiments of this application, accuracy of determining the sub-healthy object in the active-active storage system can be improved.

It should be understood that in embodiments of this application, in the two storage systems included in the active-active storage system, one storage system is a primary storage system, and the other storage system is a secondary storage system. The storage system may include one or more devices such as one or more computers or one or more servers. Optionally, a device that performs the active-active storage system management method provided in embodiments of this application may be a server or a computer in the primary storage system, or may be another device. This is not limited in embodiments of this application.

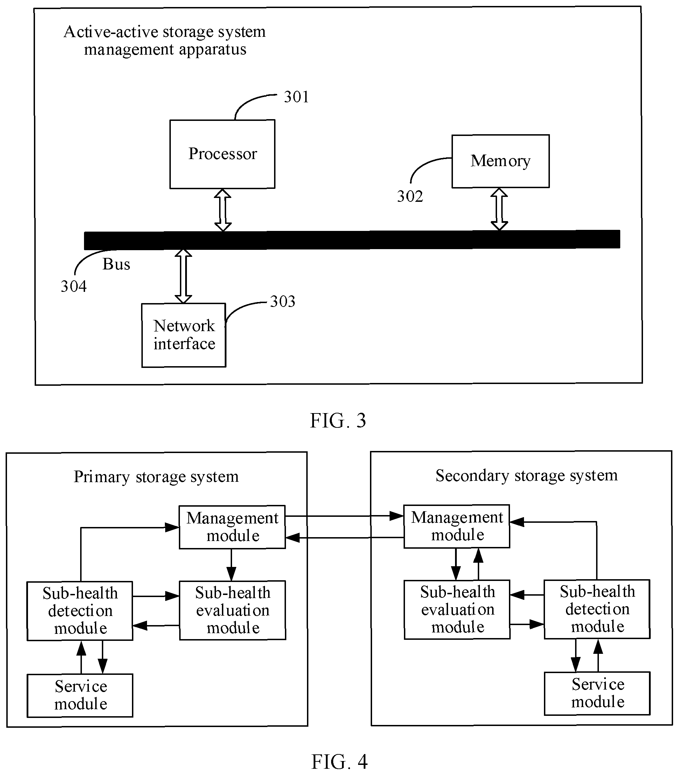

For example, FIG. 3 is a schematic hardware diagram of an active-active storage system management apparatus according to an embodiment of this application. As shown in FIG. 3, the active-active storage system management apparatus may include a processor 301, a memory 302, and a network interface 303.

The processor 301 includes one or more central processing units (central processing unit, CPU). The CPU may be a single-core CPU or a multi-core CPU.

The memory 302 includes but is not limited to a random-access memory (random access memory, RAM), a read-only memory (read only memory, ROM), an erasable programmable read-only memory (erasable programmable read-only memory, EPROM), a flash memory, an optical memory, a magnetic disk memory, or the like.

Optionally, the processor 301 implements, by using instructions stored internally, the active-active storage system management method provided in embodiments of this application, or the processor 301 implements, by reading instructions stored in the memory 302, the active-active storage system management method provided in embodiments of this application. When the processor 301 implements, by reading the instructions stored in the memory 302, the method in the foregoing embodiments, the memory 302 stores the instructions for implementing the active-active storage system management method provided in embodiments of this application.

The network interface 303 is a wired interface (port), for example, a fiber distributed data interface (fiber distributed data interface, FDDI) or a gigabit Ethernet (gigabit ethernet, GE) interface. Alternatively, the network interface 303 is a wireless interface. It should be understood that the network interface 303 includes a plurality of physical ports, and the network interface 303 is configured to send synchronization data to a peer storage system.

Optionally, the active-active storage system management apparatus further includes a bus 304. The processor 301, the memory 302, and the network interface 303 are usually connected to each other via the bus 304, or are connected to each other in another manner.

All methods in the following embodiments may be implemented in an active-active storage system management apparatus having the foregoing hardware structures. In the following embodiments, an example in which the foregoing active-active storage system management apparatus is the apparatus shown in FIG. 3 is used to describe the methods in embodiments of this application.

FIG. 4 is a schematic diagram of two storage systems in an active-active storage system according to an embodiment of this application. One storage system is used as an example. As shown in FIG. 4, the storage system includes a service module, a sub-health detection module, a sub-health evaluation module, and a management module. Specific implementation of various modules shown in FIG. 4 may be implemented by a processor by executing corresponding computer instructions. This is not limited in embodiments of this application.

The service module is configured to obtain statistical data of the storage system. The statistical data may include but is not limited to information such as an average delay of response information received by the storage system, a proportion of response information that is not returned, and a failure rate of returning the response information.

The sub-health detection module is configured to perform detection on quality of service of the active-active storage system.

The sub-health evaluation module is configured to generate a detection report of the storage system. For a primary storage system in the active-active storage system, a sub-health evaluation module of the primary storage system is further configured to comprehensively evaluate detection report information of each storage system.

The management module is configured to perform task collaboration on each storage system in the active-active storage system. For example, when detecting that the quality of service of the active-active storage system does not meet a preset condition, the sub-health detection module reports a sub-health event to the management module, and then the management module notifies a peer storage system, to trigger the peer storage system to generate detection report information of the peer storage system. For the primary storage system in the active-active storage system, a management module of the primary storage system is further configured to receive detection report information sent by a peer storage system, and send the detection report information of the peer storage system to the sub-health evaluation module of the primary storage system.

It should be noted that, in the following embodiments, the active-active storage system management method provided in embodiments of this application is described in detail by using an example in which the active-active storage system management method is executed by a device in the primary storage system (which is referred to as a first storage system below).

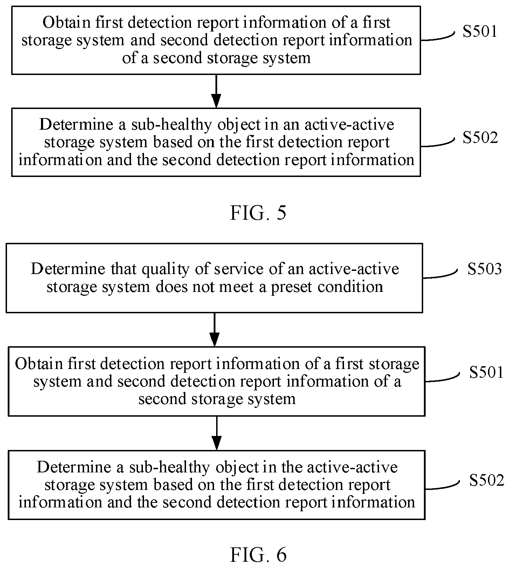

As shown in FIG. 5, an active-active storage system management method provided in an embodiment of this application may include S501 and S502.

S501: Obtain first detection report information of a first storage system and second detection report information of a second storage system.

The first detection report information is generated by the first storage system, and the second detection report information is generated by the second storage system.

In this embodiment of this application, the first detection report information includes a state of the first storage system, and the second detection report information includes a state of the second storage system. It may be understood that a state of a storage system may include a healthy state or a sub-healthy state.

S502: Determine a sub-healthy object in an active-active storage system based on the first detection report information and the second detection report information.

In this embodiment of this application, the sub-healthy object that is in the active-active storage system and that is determined based on the first detection report information and the second detection report information may include four cases shown in Table 1.

**Table 1**

| Number | Sub-healthy object |
|---|---|
| 1 | First storage system |
| 2 | Second storage system |
| 3 | First storage system and second storage system |
| 4 | Link between the first storage system and the second storage system |

According to the active-active storage system management method provided in this embodiment of this application, each storage system in the active-active storage system generates detection report information of each storage system, and then the detection report information of each storage system is comprehensively evaluated, to determine the sub-healthy object in the active-active storage system. Compared with a conventional technology, the method comprehensively analyzes a state of the active-active storage system. This can improve accuracy of determining the sub-healthy object in the active-active storage system.

Optionally, with reference to FIG. 5, as shown in FIG. 6, before S501, the active-active storage system management method provided in this embodiment of this application further includes S503.

S503: Determine that quality of service of the active-active storage system does not meet a preset condition.

In this embodiment of this application, the preset condition may include at least one of the following:
a proportion of a quantity of times of not returning response information received by the storage system is less than a preset proportion of the quantity of times of not returning the response information;
an average delay of response information received by the storage system is less than a preset delay of the response information; and
a failure rate of returning the response information received by the storage system is less than a preset failure rate of the response information.

It should be noted that, when it is determined that the quality of service of the active-active storage system does not meet the preset condition, the response information that is received by the storage system and that is in the preset condition is response information that is of a service request and that is received by the first storage system within a preset time period.

In another implementation, the active-active storage system may actively perform detection on the state of the active-active storage system, instead of being triggered to perform detection on the state of the active-active storage system based on the quality of service of the active-active storage system.

For example, the service request is a data write request. The response information of the service request is response information returned by the first storage system to a host after the first storage system receives the data write request, writes data in the data request into the first storage system, and synchronizes the data to the second storage system.

In this embodiment of this application, if the response information that is of the service request and that is received by the first storage system does not meet any one of the preset conditions, it is determined that the response information of the service request does not meet the preset condition.

If the preset condition includes that a proportion of a quantity of times of not returning the response information of the service request is less than a preset proportion of a quantity of times of not returning the response information of the service request, an average delay of the response information of the service request is less than a preset delay of the response information of the service request, and a failure rate of returning the response information of the service request is less than a preset failure rate of the response information of the service request,
for example, it is assumed that the preset proportion of the quantity of times that the response information of the service request is not returned is 1/3, the preset delay of the response information of the service request is 5 seconds, and a preset failure rate of the response information of the service request is 15%, when the proportion of the quantity of times of not returning the response information of the service request is 1/5, the average delay of the response information of the service request is 6 seconds, and the preset failure rate of the response information of the service request is 8%, it is determined that the response information of the service request does not meet the preset condition because the average delay of the response information of the service request is greater than the preset delay of the response information of the service request.

In conclusion, after receiving the service request, the first storage system generates the first detection report information when determining, based on the response information of the service request, that the quality of service of the active-active storage system does not meet the preset condition, and the first storage system notifies the second storage system (for example, sends a notification message to the second storage system), so that the second storage system generates the second detection report information. Further, the first storage system receives the second detection report information from the second storage system.

Optionally, in an implementation, S503 may alternatively be performed by the second storage system in the active-active storage system. Specifically, after receiving a service request, the second storage system determines, based on response information of the service request, whether quality of service of the active-active storage system meets a preset condition. When the quality of service of the active-active storage system does not meet the preset condition, the second storage system generates the second detection report information, and the second storage system notifies the first storage system (for example, sends a notification message to the first storage system), so that the first storage system generates the first detection report information. Further, the second storage system sends the second detection report information to the first storage system.

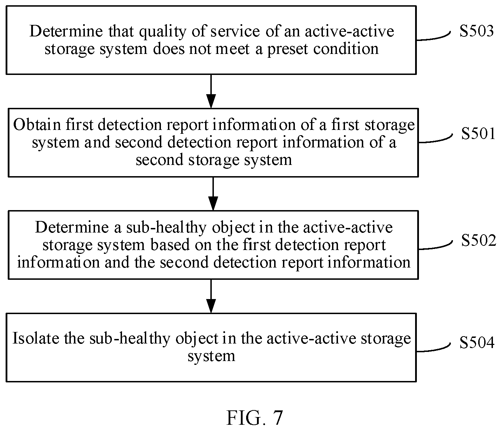

Optionally, with reference to FIG. 6, as shown in FIG. 7, after S502 (the determining a sub-healthy object in an active-active storage system based on the first detection report information and the second detection report information), the active-active storage system management method provided in this embodiment of this application further includes S504.

S504: Isolate the sub-healthy object in the active-active storage system.

The isolating the sub-healthy object in the active-active storage system means that the sub-healthy object in the active-active storage system no longer receives a service request delivered by the active-active storage system, and disconnect a link that is for data synchronization and that is between the sub-healthy object and a peer storage system of the sub-healthy object in the active-active storage system.

With reference to the four cases of the sub-healthy object in the active-active storage system shown in Table 1, in the foregoing four cases, the method for isolating the sub-healthy object in the active-active storage system specifically includes the following:
When the sub-healthy object in the active-active storage system is the first storage system, the first storage system stops receiving the service request, and the first storage system disconnects the link between the first storage system and the second storage system. Subsequently, the second storage system in the active-active storage system processes the service request, and the second storage system does not send a data synchronization message to the first storage system in a process in which the second storage system processes the service request.

When the sub-healthy object in the active-active storage system is the second storage system, the first storage system stops sending a second message to the second storage system, or stops sending a sixth message and a seventh message to the second storage system, and the first storage system sends indication information to the second storage system. The indication information indicates the second storage system to stop receiving the service request.

When the sub-healthy object in the active-active storage system is the link between the first storage system and the second storage system, the first storage system stops receiving the service request, and the first storage system disconnects the link between the first storage system and the second storage system; or the first storage system stops sending a second message to the second storage system, or stops sending a sixth message and a seventh message to the second storage system, and the first storage system sends indication information to the second storage system. The indication information indicates the second storage system to stop receiving the service request.

When the sub-healthy object in the active-active storage system is the first storage system and the second storage system, the first storage system reports alarm information, to indicate an administrator to process the alarm information.

With reference to the foregoing two architectures of the active-active storage system in FIG. 1 and FIG. 2, the following separately describes a process in which a storage system generates a detection report from a perspective of an architecture of a cross-site mirrored active-active storage system and an architecture of a cross-site cluster active-active storage system. In embodiments of this application, a method for generating first detection report information by a first storage system is similar to a method for generating second detection report information by a second storage system. In the following embodiments, an example in which the first storage system generates the first storage report information is used to describe the process in which the storage system generates the detection report.

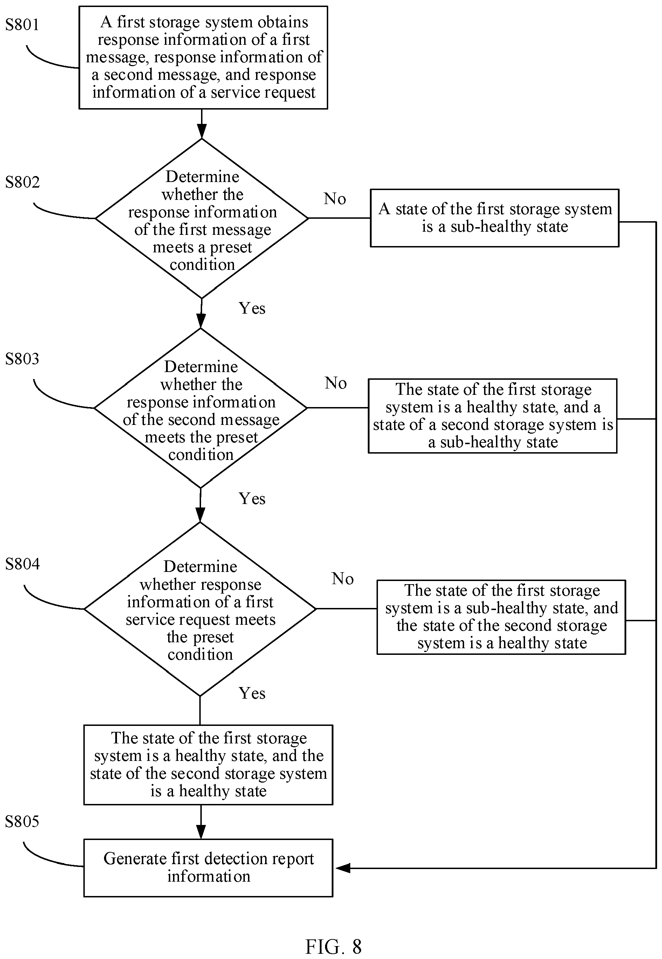

For the architecture of the cross-site mirrored active-active storage system shown in FIG. 1, as shown in FIG. 8, the method for generating the first detection report information by the first storage system may include the following steps:
S801: A first storage system obtains response information of a first message, response information of a second message, and response information of a first service request.

Refer to FIG. 1. The first message is a message sent by a logical unit number/file system service layer of the first storage system to a cache layer of the first storage system in a process in which the first storage system processes the first service request, so that the cache layer of the first storage system processes the first service request, and sends the response information of the first message to the logical unit number/file system service layer after processing the first service request.

For example, the first service request is a data write request. In one case, that the cache layer processes the first service request means that the cache layer of the first storage system writes data into a disk layer of the first storage system via a storage pool layer. In another case, that the cache layer processes the first service request means that data is successfully written into the cache layer of the first storage system.

The second message is a message sent by the logical unit number/file system service layer of the first storage system to a logical unit number/file system service layer of a second storage system in the process in which the first storage system processes the first service request, so that the second storage system processes the first service request. After the second storage system processes the first service request, the logical unit number/file system service layer of the second storage system sends the response information of the second message to the logical unit number/file system service layer of the first storage system.

For example, the first service request is a data write request. The response information of the first service request is response information returned by the first storage system to a host after the first storage system receives the data write request, writes data in the data request into the first storage system, and synchronizes the data to the second storage system.

S802: Determine whether the response information of the first message meets a preset condition.

It should be noted that, when it is determined whether the response information of the first message meets the preset condition, response information that is received by a storage system and that is in the preset condition is the response information that is of the first message and that is received by the first storage system.

The preset condition in S802 includes at least one of the following:
a proportion of a quantity of times of not returning the response information of the first message is less than a preset proportion of a quantity of times of not returning the response information of the first message;
an average delay of the response information of the first message is less than a preset delay of the response information of the first message; and
a failure rate of returning the response information of the first message is less than a preset failure rate of the response information of the first message.

In this embodiment of this application, if the response information of the first message does not meet the preset condition, it is determined that a state of the first storage system is a sub-healthy state. In this case, the first storage system generates first detection report information (that is, S805 in FIG. 8). The first detection report information includes the state of the first storage system. To be specific, the state of the first storage system is recorded as a sub-healthy state in the first detection report information. Optionally, the first detection report information does not include a state of the second storage system.

If the response information of the first message meets the preset condition, it is determined that a state of the first storage system is a healthy state, and S803 is performed.

S803: Determine whether the response information of the second message meets the preset condition.

It should be noted that, when it is determined whether the response information of the second message meets the preset condition, the response information that is received by the storage system and that is in the preset condition is the response information that is of the second message and that is received by the first storage system.

The preset condition in S803 includes at least one of the following:
a proportion of a quantity of times of not returning the response information of the second message is less than a preset proportion of a quantity of times of not returning the response information of the second message;
an average delay of the response information of the second message is less than a preset delay of the response information of the second message; and
a failure rate of returning the response information of the second message is less than a preset failure rate of the response information of the second message.

In this embodiment of this application, if the response information of the second message does not meet the preset condition, it is determined that a state of the second storage system is a sub-healthy state. In this case, the first storage system generates first detection report information (that is, S805 in FIG. 8). The first detection report information includes the state of the first storage system and the state of the second storage system. To be specific, the state of the first storage system is recorded as a healthy state and the state of the second storage system is recorded as a sub-healthy state in the first detection report information.

If the response information of the second message meets the preset condition, it is determined that a state of the second storage system is a healthy state, and S804 is performed.

S804: Determine whether the response information of the first service request meets the preset condition.

It should be noted that, when it is determined whether the response information of the first service request meets the preset condition, the response information that is received by the storage system and that is in the preset condition is the response information that is of the first service request and that is received by the first storage system.

The preset condition in S804 includes at least one of the following:
a proportion of a quantity of times of not returning the response information of the first service request is less than a preset proportion of a quantity of times of not returning the response information of the first service request;
an average delay of the response information of the first service request is less than a preset delay of the response information of the first service request; and
a failure rate of returning the response information of the first service request is less than a preset failure rate of the response information of the first service request.

In this embodiment of this application, if the response information of the first service request does not meet the preset condition, it is determined that the state of the first storage system is a sub-healthy state. In this case, the first storage system generates first detection report information (that is, S805 in FIG. 8). The first detection report information includes the state of the first storage system and the state of the second storage system. To be specific, the state of the first storage system is recorded as a sub-healthy state and the state of the second storage system is recorded as a healthy state in the first detection report information.

In S803, when the response information of the second message meets the preset condition, it is determined that the state of the second storage system is a healthy state, and when the determined state of the first storage system in S802 is a healthy state, whether a front-end layer of the first storage system is normal may be determined based on S804, to further determine the state of the first storage system. If the response information of the first service request does not meet the preset condition, it is determined that the front-end layer of the first storage system is abnormal. Therefore, it is determined that the state of the first storage system is a sub-healthy state. If the response information of the first service request meets the preset condition, it is determined that the front-end layer of the first storage system is normal. Therefore, it is determined that the state of the first storage system is a healthy state. The state of the first storage system can be more accurately determined based on S804. Therefore, accuracy of determining the sub-healthy object in the active-active system is improved.

In this embodiment of this application, if the response information of the first service request meets the preset condition, it is determined that the state of the first storage system is a healthy state. In this case, the first storage system generates first detection report information (that is, S805 in FIG. 8). The first detection report information includes the state of the first storage system and the state of the second storage system. To be specific, the state of the first storage system is recorded as a healthy state and the state of the second storage system is recorded as a healthy state in the first detection report information.

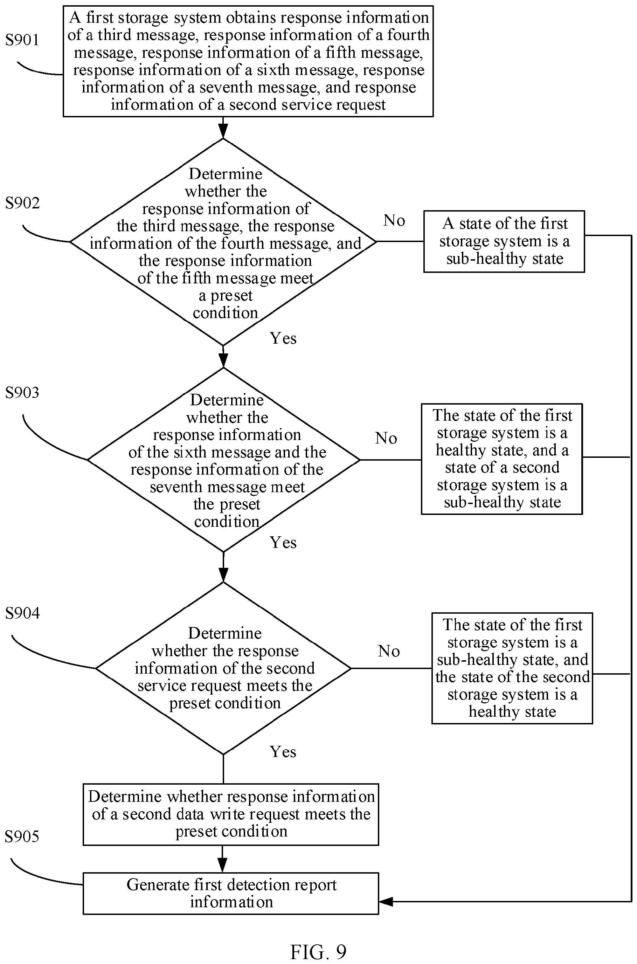

For the architecture of the cross-site cluster active-active storage system shown in FIG. 2, that the first storage system processes a service request after load balancing is performed, is used as an example. As shown in FIG. 9, the method for generating the first detection report information by the first storage system may include the following steps:
S901: A first storage system obtains response information of a third message, response information of a fourth message, response information of a fifth message, response information of a sixth message, response information of a seventh message, and response information of a second service request.

The third message is a message sent by a logical unit number/file system service layer of the first storage system to a cache layer of the first storage system in a process in which the first storage system processes the second service request, so that the cache layer of the first storage system processes the second service request, and sends the response information of the third message to the logical unit number/file system service layer after processing the second service request.

The fourth message is a message sent by the cache layer of the first storage system to a volume service layer of the first storage system in the process in which the first storage system processes the second service request, so that the volume service layer of the first storage system processes the second service request, and sends the response information of the fourth message to the cache layer after processing the second service request.

The fifth message is a message sent by the volume service layer of the first storage system to a storage pool layer of the first storage system in the process in which the first storage system processes the second service request, so that the storage pool layer of the first storage system processes the second service request, and sends the response information of the fifth message to the volume service layer after processing the second service request.

The sixth message is a message sent by the cache layer of the first storage system to a cache layer of a second storage system in the process in which the first storage system processes the second service request, so that the cache layer of the second storage system processes the second service request, and sends the response information of the sixth message to the cache layer of the first storage system after processing the second service request.

The seventh message is a message sent by the volume service layer of the first storage system to a volume service layer of the second storage system in the process in which the first storage system processes the second service request, so that the volume service layer of the second storage system processes the second service request, and sends the response information of the seventh message to the volume service layer of the first storage system after processing the second service request.

S902: Determine whether the response information of the third message, the response information of the fourth message, and the response information of the fifth message meet a preset condition.

It should be noted that, when it is determined whether the response information of the third message meets the preset condition, response information that is received by a storage system and that is in the preset condition is the response information that is of the third message and that is received by the first storage system.

The preset condition includes at least one of the following:
a proportion of a quantity of times of not returning the response information of the third message is less than a preset proportion of a quantity of times of not returning the response information of the third message;
an average delay of the response information of the third message is less than a preset delay of the response information of the third message; and
a failure rate of returning the response information of the third message is less than a preset failure rate of the response information of the third message.

When it is determined whether the response information of the fourth message meets the preset condition, the response information that is received by the storage system and that is in the preset condition is the response information that is of the fourth message and that is received by the first storage system.

The preset condition includes at least one of the following:
a proportion of a quantity of times of not returning the response information of the fourth message is less than a preset proportion of a quantity of times of not returning the response information of the fourth message;
an average delay of the response information of the fourth message is less than a preset delay of the response information of the fourth message; and
a failure rate of returning the response information of the fourth message is less than a preset failure rate of the response information of the fourth message.

When it is determined whether the response information of the fifth message meets the preset condition, the response information that is received by the storage system and that is in the preset condition is the response information that is of the fifth message and that is received by the first storage system.

The preset condition includes at least one of the following:
a proportion of a quantity of times of not returning the response information of the fifth message is less than a preset proportion of a quantity of times of not returning the response information of the fifth message;
an average delay of the response information of the fifth message is less than a preset delay of the response information of the fifth message; and
a failure rate of returning the response information of the fifth message is less than a preset failure rate of the response information of the fifth message.

In this embodiment of this application, if at least one of the response information of the third message, the response information of the fourth message, and the response information of the fifth message does not meet the preset condition, it is determined that a state of the first storage system is a sub-healthy state. In this case, the first storage system generates first detection report information (that is, S905 in FIG. 9). The state of the first storage system is recorded as a sub-healthy state in the first detection report information.

Optionally, the first detection report information does not include a state of the second storage system.

If all of the response information of the third message, the response information of the fourth message, and the response information of the fifth message meet the preset condition, it is determined that a state of the first storage system is a healthy state, and S903 is performed.

S903: Determine whether the response information of the sixth message and the response information of the seventh message meet the preset condition.

It should be noted that, when it is determined whether the response information of the sixth message meets the preset condition, the response information that is received by the storage system and that is in the preset condition is the response information that is of the sixth message and that is received by the first storage system.

The preset condition includes at least one of the following:
a proportion of a quantity of times of not returning the response information of the sixth message is less than a preset proportion of a quantity of times of not returning the response information of the sixth message;
an average delay of the response information of the sixth message is less than a preset delay of the response information of the sixth message; and
a failure rate of returning the response information of the sixth message is less than a preset failure rate of the response information of the sixth message.

When it is determined whether the response information of the seventh message meets the preset condition, the response information that is received by the storage system and that is in the preset condition is the response information that is of the seventh message and that is received by the first storage system.

The preset condition includes at least one of the following:
A proportion of a quantity of times of not returning the response information of the seventh message is less than a preset proportion of a quantity of times of not returning the response information of the seventh message;
an average delay of the response information of the seventh message is less than a preset delay of the response information of the seventh message; and
a failure rate of returning the response information of the seventh message is less than a preset failure rate of the response information of the seventh message.

In this embodiment of this application, if at least one of the response information of the sixth message and the response information of the seventh message does not meet the preset condition, it is determined that a state of the second storage system is a sub-healthy state. In this case, the first storage system generates first detection report information (that is, S905 in FIG. 9). The first detection report information includes that the state of the first storage system is a healthy state. To be specific, the state of the first storage system is recorded as a healthy state and the state of the second storage system is recorded as a sub-healthy state in the first detection report information.

If both the response information of the sixth message and the response information of the seventh message meet the preset condition, it is determined that a state of the second storage system is a healthy state, and S904 is performed.

S904: Determine whether the response information of the second service request meets the preset condition.

A method for determining whether the response information of the second service request meets the preset condition is similar to that in S804. Details are not described in this embodiment of this application.

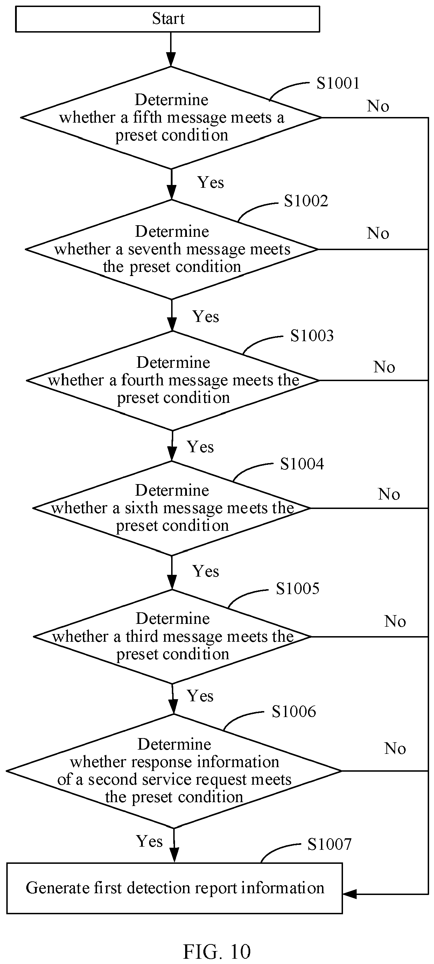

Optionally, in the architecture of the cross-site cluster active-active storage system shown in FIG. 2, the method for generating the first detection report information by the first storage system may alternatively be implemented by using a method procedure shown in FIG. 10.

S1001: Determine whether a fifth message meets a preset condition.

When the fifth message does not meet the preset condition, it is determined that a state of a first storage system is a sub-healthy state. In this case, the first storage system generates first detection report information (that is, S1007 in FIG. 10). The first detection report information includes the state of the first storage system. To be specific, the state of the first storage system is recorded as a sub-healthy state in the first detection report information. In addition, the first detection report information does not include a state of a second storage system.

When the fifth message meets the preset condition, it is determined that a state of a first storage system is a healthy state. In this case, S1002 is performed.

S1002: Determine whether a seventh message meets the preset condition.

When the seventh message does not meet the preset condition, it is determined that a state of the second storage system is a sub-healthy state. In this case, the first storage system generates first detection report information (that is, S1007 in FIG. 10). The first detection report information includes the state of the first storage system and the state of the second storage system. To be specific, the state of the first storage system is recorded as a healthy state and the state of the second storage system is recorded as a sub-healthy state in the first detection report information.

When a sixth message meets the preset condition, it is determined that a state of the second storage system is healthy. In this case, S1003 is performed.

S1003: Determine whether a fourth message meets a preset condition.

When the fourth message does not meet the preset condition, it is determined that the state of the first storage system is a sub-healthy state. In this case, the first storage system generates first detection report information (that is, S1007 in FIG. 10). The first detection report information includes the state of the first storage system and the state of the second storage system. To be specific, the state of the first storage system is recorded as a sub-healthy state and the state of the second storage system is recorded as a healthy state in the first detection report information.

When the fourth message meets the preset condition, it is determined that the state of the first storage system is healthy. In this case, S1004 is performed.

S1004: Determine whether a sixth message meets the predetermined condition.

When the sixth message does not meet the preset condition, it is determined that the state of the second storage system is a sub-healthy state. In this case, the first storage system generates first detection report information (that is, S1007 in FIG. 10). The first detection report information includes the state of the first storage system and the state of the second storage system. To be specific, the state of the first storage system is recorded as a healthy state and the state of the second storage system is recorded as a sub-healthy state in the first detection report information.

When the sixth message meets the preset condition, it is determined that the state of the second storage system is healthy. In this case, S1005 is performed.

S1005: Determine whether a third message meets the predetermined condition.

When the third message does not meet the preset condition, it is determined that the state of the first storage system is a sub-healthy state. In this case, the first storage system generates first detection report information (that is, S1007 in FIG. 10). The first detection report information includes the state of the first storage system and the state of the second storage system. To be specific, the state of the first storage system is recorded as a sub-healthy state and the state of the second storage system is recorded as a healthy state in the first detection report information.

When the third message meets the preset condition, it is determined that the state of the first storage system is a healthy state. In this case, S1006 is performed. S1006 is similar to S804. Details are not described in this embodiment of this application.

The first storage system generates first detection report information (that is, S1007 in FIG. 10). The first detection report information includes the state of the first storage system and the state of the second storage system. To be specific, the state of the first storage system is recorded as a healthy state and the state of the second storage system is recorded as a healthy state in the first detection report information.

It may be learned from the steps S801 to S804 or S901 and S902 that all combination results of the first detection report information and second detection report information are shown in Table 2.

**Table 2**

| First detection report information | | Second detection report information | | Conclusion |
|---|---|---|---|---|
| A is sub-healthy | / | B is sub-healthy | / | A and B are sub-healthy |
| A is sub-healthy | / | B is healthy | A is sub-healthy | A is sub-healthy and B is healthy |
| A is sub-healthy | / | B is sub-healthy | A is healthy | A and B are sub-healthy |
| A is sub-healthy | / | B is healthy | A is healthy | A is sub-healthy and B is healthy |
| A is healthy | B is sub-healthy | B is sub-healthy | / | A is healthy and B is sub-healthy |
| A is healthy | B is sub-healthy | B is healthy | A is sub-healthy | Link is sub-healthy |
| A is healthy | B is sub-healthy | B is sub-healthy | A is healthy | A is healthy and B is sub-healthy |
| A is healthy | B is sub-healthy | B is healthy | A is healthy | Link is sub-healthy |
| A is sub-healthy | B is healthy | B is sub-healthy | / | A and B are sub-healthy |
| A is sub-healthy | B is healthy | B is healthy | A is sub-healthy | A is sub-healthy and B is healthy |
| A is sub-healthy | B is healthy | B is sub-healthy | A is healthy | A and B are sub-healthy |
| A is sub-healthy | B is healthy | B is healthy | A is healthy | A is sub-healthy and B is healthy |
| A is healthy | B is healthy | B is sub-healthy | / | A is healthy and B is sub-healthy |
| A is healthy | B is healthy | B is healthy | A is sub-healthy | Link is sub-healthy |
| A is healthy | B is healthy | B is sub-healthy | A is healthy | A is healthy and B is sub-healthy |
| A is healthy | B is healthy | B is healthy | A is healthy | A and B are healthy |

In Table 2, "/" represents that the first detection report information does not include the state of the second storage system or the second detection report information does not include the state of the first storage system; "A" represents the state of the first storage system, "B" represents the state of the second storage system; and "link is sub-healthy" represents that a state of a link between the first storage system and the second storage system is sub-healthy.

Based on Table 2, in S502, the method for determining the sub-healthy object in the active-active storage system based on the first detection report information and the second detection report information is specifically as follows:
When the state of the first storage system in the first detection report information is a sub-healthy state, and a state of the second storage system in the second detection report information is a healthy state, the sub-healthy object in the active-active storage system is the first storage system.

When a state of the second storage system in the second detection report information is a sub-healthy state, and the state of the first storage system in the first detection report information is a healthy state, the sub-healthy object in the active-active storage system is the second storage system.

When the state of the first storage system in the first detection report information is a healthy state, and a state of the first storage system in the second detection report information is a sub-healthy state; or when a state of the second storage system in the second detection report information is a healthy state, and the state of the second storage system in the first detection report information is a sub-healthy state, the sub-healthy object in the active-active storage system is the link between the first storage system and the second storage system.

When the state of the first storage system in the first detection report information is a sub-healthy state, and a state of the second storage system in the second detection report information is a sub-healthy state, the sub-healthy object in the active-active storage system is the first storage system and the second storage system.

After the sub-healthy object in the active-active storage system is determined, the sub-healthy object in the active-active storage system is isolated based on the method S504.

According to the active-active storage system management method provided in this embodiment of this application, each storage system in the active-active storage system generates detection report information of each storage system, and then the detection report information of each storage system is comprehensively evaluated, to determine the sub-healthy object in the active-active storage system. Compared with a conventional technology, the method comprehensively analyzes a state of the active-active storage system. This can improve accuracy of determining the sub-healthy object in the active-active storage system.

Correspondingly, an embodiment of this application provides an active-active storage system management apparatus. The active-active storage system management apparatus is configured to perform the steps in the foregoing active-active storage system management methods. In this embodiment of this application, the active-active storage system management apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. In this embodiment of this application, module division is an example, and is merely a logical function division. In actual implementation, another division manner may be used.

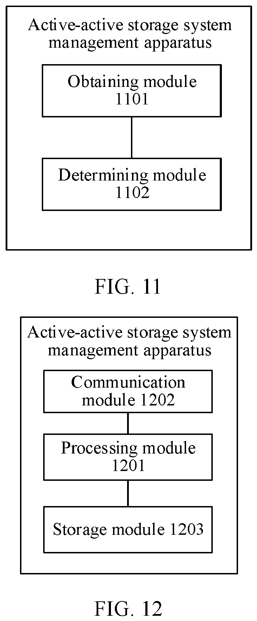

When each functional module is obtained through division based on each corresponding function, FIG. 11 is a possible schematic structural diagram of an active-active storage system management apparatus in the foregoing embodiments. As shown in FIG. 11, the active-active storage system management apparatus includes an obtaining module 1101 and a determining module 1102.

The obtaining module 1101 is configured to obtain first detection report information of a first storage system and second detection report information of a second storage system, for example, perform step S501 in the foregoing method embodiments.

The determining module 1102 is configured to determine a sub-healthy object in an active-active storage system based on the first detection report information and the second detection report information, for example, perform step S502 in the foregoing method embodiments.

Optionally, the determining module 1102 in the active-active storage system management apparatus provided in this embodiment of this application is further configured to determine that quality of service of the active-active storage system does not meet a preset condition, for example, perform step S503 in the foregoing method embodiments.

The modules of the foregoing active-active storage system management apparatus may be further configured to perform other actions (for example, the steps described in S801 to S804 or S901 to S904) in the foregoing method embodiments. All related content of the steps in the foregoing method embodiments may be cited for function descriptions of corresponding functional modules. Details are not described herein.

When an integrated unit is used, FIG. 12 is a schematic structural diagram of an active-active storage system management apparatus according to an embodiment of this application. In FIG. 12, the active-active storage system management apparatus includes a processing module 1201 and a communication module 1202. The processing module 1201 is configured to control and manage actions of the active-active storage system management apparatus, for example, perform steps performed by the obtaining module 1101 and the determining module 1102, and/or is configured to perform another process of the technology described in this specification. The communication module 1202 is configured to support interaction between the active-active storage system management apparatus and another device, and the like. As shown in FIG. 12, the active-active storage system management apparatus may further include a storage module 1203. The storage module 1203 is configured to store program code of the active-active storage system management apparatus, second detection report information received from a second storage system, and the like.

The processing module 1201 may be a processor or a controller, for example, the processor 310 in FIG. 3. The communication module 1202 may be a transceiver, an RF circuit, a communication interface, or the like, for example, a mobile communication module 304 and/or a wireless communication module 303 in FIG. 3. The storage module 1203 may be a memory, for example, the memory 302 in FIG. 3.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or storage system to another website, computer, server, or storage system in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a storage system, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid state drive, SSD)), or the like.

The foregoing descriptions about implementations allow a person skilled in the art to clearly understand that, for the purpose of convenient and brief description, division of the foregoing functional modules is used as an example for illustration. During actual application, the foregoing functions can be allocated to different modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An active-active storage system management method, wherein an active-active storage system comprises a first storage system and a second storage system, and the method comprises:
obtaining first detection report information of the first storage system and second detection report information of the second storage system, wherein the first detection report information is generated by the first storage system, and the second detection report information is generated by the second storage system; and
determining a sub-healthy object in the active-active storage system based on the first detection report information and the second detection report information.

2. The method according to claim 1, wherein before the obtaining first detection report information of the first storage system and second detection report information of the second storage system, the method further comprises:
determining that quality of service of the active-active storage system does not meet a preset condition.

3. The method according to claim 2, wherein the preset condition comprises at least one of the following:
a proportion of a quantity of times of not returning response information received by a storage system is less than a preset proportion of the quantity of times of not returning the response information;
an average delay of the response information is less than a preset delay of the response information; and
a failure rate of returning the response information is less than a preset failure rate of the response information.

4. The method according to claim 3, wherein the first detection report information comprises state information of the first storage system; and
when response information of a first message does not meet the preset condition, a state of the first storage system is recorded as a sub-healthy state in the first detection report information, wherein
the first message is a message sent by a logical unit number/file system service layer of the first storage system to a cache layer of the first storage system in a process in which the first storage system processes a first service request.

5. The method according to claim 4, wherein the first detection report information comprises the state of the first storage system and a state of the second storage system; and
when the response information of the first message meets the preset condition, and response information of a second message does not meet the preset condition, the state of the first storage system is recorded as a healthy state and the state of the second storage system is recorded as a sub-healthy state in the first detection report information, wherein the second message is a message sent by the logical unit number/file system service layer of the first storage system to a logical unit number/file system service layer of the second storage system in the process in which the first storage system processes the first service request.

6. The method according to claim 5, wherein
when the response information of the first message meets the preset condition, the response information of the second message meets the preset condition, and response information of the first service request does not meet the preset condition, the state of the first storage system is recorded as a sub-healthy state and the state of the second storage system is recorded as a healthy state in the first detection report information.

7. The method according to claim 5, wherein
when the response information of the first message meets the preset condition, the response information of the second message meets the preset condition, and response information of the first service request meets the preset condition, the state of the first storage system is recorded as a healthy state and the state of the second storage system is recorded as a healthy state in the first detection report information.

8. The method according to claim 3, wherein the first detection report information comprises a state of the first storage system; and
when at least one of response information of a third message, response information of a fourth message, or response information of a fifth message does not meet the preset condition, the state of the first storage system is recorded as a sub-healthy state in the first detection report information, wherein
the third message is a message sent by a logical unit number/file system service layer of the first storage system to a cache layer of the first storage system in a process in which the first storage system processes a second service request;
the fourth message is a message sent by the cache layer of the first storage system to a volume service layer of the first storage system in the process in which the first storage system processes the second service request; and
the fifth message is a message sent by the volume service layer of the first storage system to a storage pool layer of the first storage system in the process in which the first storage system processes the second service request.

9. The method according to claim 8, wherein the first detection report information comprises the state of the first storage system and a state of the second storage system; and
when the response information of the third message, the response information of the fourth message, and the response information of the fifth message meet the preset condition, and at least one of response information of a sixth message and response information of a seventh message does not meet the preset condition, the state of the first storage system is recorded as a healthy state and the state of the second storage system is recorded as a sub-healthy state in the first detection report information, wherein
the sixth message is a message sent by the cache layer of the first storage system to a cache layer of the second storage system in the process in which the first storage system processes the second service request; and
the seventh message is a message sent by the volume service layer of the first storage system to a volume service layer of the second storage system in the process in which the first storage system processes the second service request.

10. The method according to claim 8 or 9, wherein the first detection report information further comprises the state of the second storage system; and
when the response information of the third message, the response information of the fourth message, and the response information of the fifth message meet the preset condition, the response information of the sixth message and the response information of the seventh message both meet the preset condition, and response information of the second service request does not meet the preset condition, the state of the first storage system is recorded as a sub-healthy state and the state of the second storage system is recorded as a healthy state in the first detection report information.

11. The method according to claim 10, wherein
when the response information of the third message, the response information of the fourth message, and the response information of the fifth message meet the preset condition, the response information of the sixth message and the response information of the seventh message both meet the preset condition, and the response information of the second service request meets the preset condition, the state of the first storage system is recorded as a healthy state and the state of the second storage system is recorded as a healthy state in the first detection report information.

12. The method according to any one of claims 1 to 11, wherein
when the state of the first storage system in the first detection report information is a sub-healthy state, and a state of the second storage system in the second detection report information is a healthy state, the sub-healthy object in the active-active storage system is the first storage system.

13. The method according to any one of claims 1 to 11, wherein when a state of the second storage system in the second detection report information is a sub-healthy state, and the state of the first storage system in the first detection report information is a healthy state, the sub-healthy object in the active-active storage system is the second storage system.

14. The method according to any one of claims 1 to 11, wherein
when the state of the first storage system in the first detection report information is a healthy state and a state of the first storage system in the second detection report information is a sub-healthy state; or when a state of the second storage system in the second detection report information is a healthy state and the state of the second storage system in the first detection report information is a sub-healthy state, the sub-healthy object in the active-active storage system is a link between the first storage system and the second storage system.

15. The method according to any one of claims 1 to 11, wherein
when the state of the first storage system in the first detection report information is a sub-healthy state, and a state of the second storage system in the second detection report information is a sub-healthy state, the sub-healthy object in the active-active storage system is the first storage system and the second storage system.

16. The method according to any one of claims 1 to 15, wherein the method further comprises:
when the sub-healthy object in the active-active storage system is the first storage system, stopping, by the first storage system, receiving a service request, and disconnecting, by the first storage system, the link between the first storage system and the second storage system.

17. The method according to any one of claims 1 to 15, wherein the method further comprises:
when the sub-healthy object in the active-active storage system is the second storage system, stopping, by the first storage system, sending the second message to the second storage system, or stopping sending the sixth message and the seventh message to the second storage system, and sending, by the first storage system, indication information to the second storage system, wherein the indication information indicates the second storage system to stop receiving a service request.

18. The method according to any one of claims 1 to 15, wherein the method further comprises:
when the sub-healthy object in the active-active storage system is the link between the first storage system and the second storage system, stopping, by the first storage system, receiving a service request, and disconnecting, by the first storage system, the link between the first storage system and the second storage system; or stopping, by the first storage system, sending the second message to the second storage system, or stopping sending the sixth message and the seventh message to the second storage system, and sending, by the first storage system, indication information to the second storage system, wherein the indication information indicates the second storage system to stop receiving a service request.

19. The method according to any one of claims 1 to 15, wherein the method further comprises:
when the sub-healthy object in the active-active storage system is the first storage system and the second storage system, reporting, by the first storage system, alarm information.

20. An active-active storage system management apparatus, wherein an active-active storage system comprises a first storage system and a second storage system, and the active-active storage system management apparatus comprises an obtaining module and a determining module, wherein
the obtaining module is configured to obtain first detection report information of the first storage system and second detection report information of the second storage system, wherein the first detection report information is generated by the first storage system, and the second detection report information is generated by the second storage system; and
the determining module is configured to determine a sub-healthy object in the active-active storage system based on the first detection report information and the second detection report information.

21. The active-active storage system management apparatus according to claim 20, wherein the determining module is further configured to determine that quality of service of the active-active storage system does not meet a preset condition.

22. The active-active storage system management apparatus according to claim 21, wherein the preset condition comprises at least one of the following:
a proportion of a quantity of times of not returning response information received by a storage system is less than a preset proportion of the quantity of times of not returning the response information;
an average delay of the response information is less than a preset delay of the response information; and
a failure rate of returning the response information is less than a preset failure rate of the response information.

23. The active-active storage system management apparatus according to claim 22, wherein the first detection report information comprises state information of the first storage system; and
when response information of a first message does not meet the preset condition, a state of the first storage system is recorded as a sub-healthy state in the first detection report information, wherein
the first message is a message sent by a logical unit number/file system service layer of the first storage system to a cache layer of the first storage system in a process in which the first storage system processes a first service request.

24. The active-active storage system management apparatus according to claim 23, wherein the first detection report information comprises the state of the first storage system and a state of the second storage system; and
when the response information of the first message meets the preset condition, and response information of a second message does not meet the preset condition, the state of the first storage system is recorded as a healthy state and the state of the second storage system is recorded as a sub-healthy state in the first detection report information, wherein the second message is a message sent by the logical unit number/file system service layer of the first storage system to a logical unit number/file system service layer of the second storage system in the process in which the first storage system processes the first service request.

25. The active-active storage system management apparatus according to claim 24, wherein
when the response information of the first message meets the preset condition, the response information of the second message meets the preset condition, and response information of the first service request does not meet the preset condition, the state of the first storage system is recorded as a sub-healthy state and the state of the second storage system is recorded as a healthy state in the first detection report information.

26. The active-active storage system management apparatus according to claim 25, wherein
when the response information of the first message meets the preset condition, the response information of the second message meets the preset condition, and response information of the first service request meets the preset condition, the state of the first storage system is recorded as a healthy state and the state of the second storage system is recorded as a healthy state in the first detection report information.

27. The active-active storage system management apparatus according to any one of claims 20 to 22, wherein the first detection report information comprises a state of the first storage system; and
when at least one of response information of a third message, response information of a fourth message, or response information of a fifth message does not meet the preset condition, the state of the first storage system is recorded as a sub-healthy state in the first detection report information, wherein
the third message is a message sent by a logical unit number/file system service layer of the first storage system to a cache layer of the first storage system in a process in which the first storage system processes a second service request;
the fourth message is a message sent by the cache layer of the first storage system to a volume service layer of the storage system in the process in which the first storage system processes the second service request; and
the fifth message is a message sent by the volume service layer of the first storage system to a storage pool layer of the storage system in the process in which the first storage system processes the second service request.

28. The active-active storage system management apparatus according to claim 27, wherein the first detection report information comprises the state of the first storage system and a state of the second storage system; and
when the response information of the third message, the response information of the fourth message, and the response information of the fifth message meet the preset condition, and at least one of response information of a sixth message and response information of a seventh message does not meet the preset condition, the state of the first storage system is recorded as a healthy state and the state of the second storage system is recorded as a sub-healthy state in the first detection report information, wherein
the sixth message is a message sent by the cache layer of the first storage system to a cache layer of the second storage system in the process in which the first storage system processes the second service request; and
the seventh message is a message sent by the volume service layer of the first storage system to a volume service layer of the second storage system in the process in which the first storage system processes the second service request.

29. The active-active storage system management apparatus according to claim 27 or 28, wherein
when the response information of the third message, the response information of the fourth message, and the response information of the fifth message meet the preset condition, the response information of the sixth message and the response information of the seventh message both meet the preset condition, and response information of the second service request does not meet the preset condition, the state of the first storage system is recorded as a sub-healthy state and the state of the second storage system is recorded as a healthy state in the first detection report information.

30. The active-active storage system management apparatus according to claim 29, wherein
when the response information of the third message, the response information of the fourth message, and the response information of the fifth message meet the preset condition, the response information of the sixth message and the response information of the seventh message both meet the preset condition, and the response information of the second service request meets the preset condition, the state of the first storage system is recorded as a healthy state and the state of the second storage system is recorded as a healthy state in the first detection report information.

31. The active-active storage system management apparatus according to any one of claims 20 to 30, wherein
when the state of the first storage system in the first detection report information is a sub-healthy state, and a state of the second storage system in the second detection report information is a healthy state, the sub-healthy object in the active-active storage system is the first storage system.

32. The active-active storage system management apparatus according to any one of claims 20 to 30, wherein
when a state of the second storage system in the second detection report information is a sub-healthy state, and the state of the first storage system in the first detection report information is a healthy state, the sub-healthy object in the active-active storage system is the second storage system.

33. The active-active storage system management apparatus according to any one of claims 20 to 30, wherein
when the state of the first storage system in the first detection report information is a healthy state and a state of the first storage system in the second detection report information is a sub-healthy state; or when a state of the second storage system in the second detection report information is a healthy state and the state of the second storage system in the first detection report information is a sub-healthy state, the sub-healthy object in the active-active storage system is a link between the first storage system and the second storage system.

34. The active-active storage system management apparatus according to any one of claims 20 to 30, wherein
when the state of the first storage system in the first detection report information is a sub-healthy state, and a state of the second storage system in the second detection report information is a sub-healthy state, the sub-healthy object in the active-active storage system is the first storage system and the second storage system.

35. The active-active storage system management apparatus according to any one of claims 20 to 34, wherein
when the sub-healthy object in the active-active storage system is the first storage system, the first storage system stops receiving a service request, and the first storage system disconnects the link between the first storage system and the second storage system.

36. The active-active storage system management apparatus according to any one of claims 20 to 34, wherein
when the sub-healthy object in the active-active storage system is the second storage system, the first storage system stops sending the second message to the second storage system, or stops sending the sixth message and the seventh message to the second storage system, and the first storage system sends indication information to the second storage system, wherein the indication information indicates the second storage system to stop receiving a service request.

37. The active-active storage system management apparatus according to any one of claims 20 to 34, wherein
when the sub-healthy object in the active-active storage system is the link between the first storage system and the second storage system, the first storage system stops receiving a service request, and the first storage system disconnects the link between the first storage system and the second storage system; or the first storage system stops sending the second message to the second storage system, or stops sending the sixth message and the seventh message to the second storage system, and the first storage system sends indication information to the second storage system, wherein the indication information indicates the second storage system to stop receiving a service request.

38. The active-active storage system management apparatus according to any one of claims 20 to 34, wherein
when the sub-healthy object in the active-active storage system is the first storage system and the second storage system, the first storage system reports alarm information.

39. An active-active storage system management apparatus, comprising a memory and a processor, wherein the memory is coupled to the processor, the memory is configured to store computer program code, and the computer program code comprises computer instructions; and when the computer instructions are executed by the processor, the active-active storage system management apparatus is enabled to perform the method according to any one of claims 1 to 19.

40. A computer-readable storage medium, comprising computer instructions, wherein when the computer instructions are run on an active-active storage system management apparatus, the active-active storage system management apparatus is enabled to perform the method according to any one of claims 1 to 19.

41. A computer program product, wherein when the computer program product runs on a computer, the computer is enabled to perform the method according to any one of claims 1 to 19.
